# EUROPEAN PATENT APPLICATION

(11) **EP 4 317 282 A1**
(43) Date of publication of application: **07.02.2024**
(21) Application number: 22775667.3
(22) Date of filing: 23.03.2022
(51) Int. Cl.: C08K 5/06, C08K 5/10, C08K 5/5415, C08L 83/04, C08L 83/05, C08L 83/07

(54) **ORGANOPOLYSILOXANE COMPOSITION**

(30) Priority: 23.03.2021 JP 2021048055
(71) Applicant: Dow Toray Co., Ltd., Tokyo 140-8617 (JP)
(72) Inventor: YOSHITAKE, Makoto, Ichihara-shi, Chiba 299-0108 (JP)
(74) Representative: Murgitroyd & Company
(86) International application number: PCT/JP2022/013421
(87) International publication number: WO 2022/202885

(57) **Abstract**

The organopolysiloxane composition of the present invention includes at least (A) an organopolysiloxane expressed by an average unit formula, having a silicon-bonded hydroxyl group, (B) an organopolysiloxane expressed by an average unit formula, which is different from compound (A), and (C) a compound having at least two functional groups selected from ether bonds, ester bonds, and alkoxysilyl groups expressed by a formula, in one molecule, where the amount of compound (A) is 2 to 70 mass% of the sum of component (A) and component (B), and the amount of component (C) is an amount where the sum of functional groups in component (C) is 0.05 mols or more with regard to 1 mol of silicon-bonded hydroxyl groups in component (A). The composition has sufficient thixotropic properties, independent of inorganic powders such as fumed silica, precipitated silica, alumina, titanium oxide, and the like.

## Description

### [TECHNICAL FIELD]

The present invention relates to an organopolysiloxane composition having thixotropic properties.

### [BACKGROUND ART]

Organopolysiloxanes are used as a main agent in grease compositions and curing compositions based on heat resistance, electrical insulation, transparency, curability, and the like thereof. When used, for example, for screen printing, potting, or as coatings, the compositions preferably have thixotropic properties. Organopolysiloxanes generally do not have thixotropic properties; therefore, the following compositions are known:
compositions in which fumed silica and an organosiloxane oligomer having a silicon atom-bonded hydroxyl group (silanol group), organooxy group, or epoxy group are added to an organopolysiloxane (refer to Patent Documents 1 and 2);
a composition in which fumed silica, precipitated silica, alumina, titanium oxide, or other inorganic powder, and a polyfunctional acrylate and/or polyfunctional methacrylate are added to an organopolysiloxane (refer to Patent Document 3);
a composition in which fumed silica, precipitated silica, alumina, titanium oxide, or other inorganic powder, and an epoxy group-containing compound are added to an organopolysiloxane (refer to Document 4);
a composition in which an epoxy group functional compound, a (poly)ether group functional compound, or a (poly)ester group functional compound is added to an organopolysiloxane (refer to Patent Document 5); and
a composition in which a high molecular weight MQ resin and/or MDQ resin is added to an organopolysiloxane (refer to Document 6).

However, there is a problem where inorganic powders such as fumed silica, precipitated silica, alumina, titanium oxide, and the like have inferior affinity with regard to organopolysiloxanes, and thus transparency of the resulting compositions is low. Therefore, the use of hydrophobic inorganic powders, where the surface of the inorganic powder is treated with a silane compound such as hexamethylsilazane, dimethyldichlorosilane, or the like, to achieve hydrophobicity, results in a problem where thickening and thixotropic properties are reduced. Furthermore, there is a problem where optical properties of such compositions change with temperature due to differences in temperature variations of refractive indices of fumed silica and organopolysiloxane.

On the other hand, there is a problem where compositions containing an epoxy group functional compound, (poly)ether group functional compound, (poly)ester group functional compound, or high molecular weight MQ resin and/or MDQ resin do not have sufficient thixotropic properties.

### [PRIOR ART DOCUMENTS]

### [PATENT DOCUMENTS]

[Patent Document 1] Japanese Unexamined Patent Application 2009-235265
[Patent Document 2] International Publication WO 2014/050318 Pamphlet
[Patent Document 3] Japanese Unexamined Patent Application 2015-010131
[Patent Document 4] Japanese Unexamined Patent Application 2015-010132
[Patent Document 5] Japanese PCT Application 2018-512067
[Patent Document 6] Japanese Unexamined Patent Application 2014-237808

### [SUMMARY OF THE INVENTION]

### [PROBLEM TO BE SOLVED BY THE INVENTION]

An object of the present invention is to provide an organopolysiloxane composition having sufficient thixotropic properties, independent of inorganic powders such as fumed silica, precipitated silica, alumina, titanium oxide, and the like.

### [MEANS FOR SOLVING THE PROBLEM]

The organopolysiloxane composition of the present invention at least contains:
(A) an organopolysiloxane expressed by the average unit formula:

   (R¹₃SiO_{1/2})ₐ(R¹₂SiO_{2/2})_{b}(R¹SiO_{3/2})_{c}(SiO_{4/2})_{d}(HO_{1/2})ₑ

   (where R¹ each independently represents a hydrogen atom or a monovalent hydrocarbon group having 1 to 10 carbon atoms, and a, b c and d each represent a number satisfying 0 ≤ a ≤ 0.8, 0 ≤ b ≤ 0.8, 0 ≤ c ≤ 0.8, and 0 ≤ d ≤ 0.8, and 0.2 ≤ a + b ≤ 0.8, 0.2 ≤ c + d ≤ 0.8, and a + b + c + d = 1, and e represents a number satisfying 0.05 ≤ e ≤ 0.5);
(B) an organopolysiloxane expressed by the average unit formula:

   (R²₃SiO_{1/2})_{f}(R²₂SiO_{2/2})_{g}(R²SiO_{3/2})ₕ(SiO_{4/2})ᵢ(HO_{1/2})ⱼ

   (where R² each independently represents a hydrogen atom or a monovalent hydrocarbon group having 1 to 10 carbon atoms, and f, g h, and i each represent a number satisfying 0 ≤ f ≤ 1, 0 ≤ g ≤ 1, 0 ≤ h ≤ 0.8, and 0 ≤ i ≤ 0.8, and 0.2 ≤ f + g ≤ 1, 0 ≤ h + i ≤ 0.8, and f + g + h + i = 1, and j represents a number satisfying 0 ≤ j < 0.05); and
(C) a compound having at least two functional groups selected from ether bonds, ester bonds, and alkoxysilyl groups expressed by the general formula:

   R³ₖ(R⁴O)₍₃₋ₖ₎Si-

   (where R³ represents a monovalent hydrocarbon group having 1 to 10 carbon atoms, R⁴ represents an alkyl group having 1 to 10 carbon atoms, and k represents 0, 1, or 2)
   in one molecule; where
   the amount of component (A) is 2 to 70 mass% of the sum of the aforementioned component (A) and component (B), and the amount of component (C) is an amount in which the sum of the functional groups in component (C) is 0.05 mol or more with regard to 1 mol of the silicon-bonded hydroxyl group in component (A).

In the present composition, a viscosity η of the mixture of component (A) and component (B) at 25°C as measured by a rotational viscometer at a shear rate of 10/sec is preferably 0.01 to 10,000 Pa-s.

In the present composition, component (C) is preferably a compound having at least two of the ether bonds in one molecule, a compound having at least two of the alkoxysilyl groups in one molecule, a compound having the ether bond and the alkoxysilyl group in one molecule, or a compound having the ester bond and the alkoxysilyl group in one molecule.

If component (B) in the present composition is an organopolysiloxane having an alkenyl group and an organopolysiloxane having a silicon-bonded hydrogen atom, the present composition preferably further contains (D) a hydrosilylation reaction catalyst to obtain a curable composition.

### [EFFECT OF THE INVENTION]

The organopolysiloxane composition of the present invention has sufficient thixotropic properties, independent of inorganic powders such as fumed silica, precipitated silica, alumina, titanium oxide, and the like.

### [MODE FOR CARRYING OUT THE INVENTION]

### Definitions of Terms

The term "thixotropic properties" as used herein refers to properties where the ratio of apparent viscosities at two different rotational speeds (shear rates), and specifically, the ratio of a viscosity η₁ at a lower rotational speed to a viscosity η₂ at a higher rotational speed, in other words, where n₁/n₂ is higher than 1 and preferably 1.5 or more, is in accordance with JIS K7117, "Viscosity Testing Method for Liquid Resins Using a Rotational Viscometer". This ratio is expressed as the "thixotropy index".

### Organopolysiloxane Composition

Component (B) is an organopolysiloxane expressed by the average unit formula:

(R²₃SiO_{1/2})_{f}(R²₂SiO_{2/2})_{g}(R²SiO_{3/2})ₕ(SiO_{4/2})ᵢ(HO_{1/2})ⱼ

In the formula, each R¹ independently represents a hydrogen atom or a monovalent hydrocarbon group having 1 to 10 carbon atoms. Examples of the monovalent hydrocarbon group of R¹ include: methyl groups, ethyl groups, propyl groups, butyl groups, pentyl groups, hexyl groups, heptyl groups, and other alkyl groups having 1 to 10 carbon atoms; vinyl groups, allyl groups, butenyl groups, pentenyl groups, hexenyl groups, heptenyl groups, octenyl groups, and other alkenyl groups having 2 to 10 carbon atoms; phenyl groups, tolyl groups, xylyl groups, and other aryl groups having 6 to 10 carbon atoms; benzyl groups, phenethyl groups, and other aralkyl groups having 7 to 10 carbon atoms; 3,3,3-trifluoropropyl groups, 4,4,4,3,3-pentafluorobutyl groups, 5,5,5,4,4,3,3-heptafluoropentyl groups, 6,6,6,5,5,4,4,3,3-nanofluorohexyl groups, 7,7,7,6,6,5,5,4,4,3,3-undecafluoroheptyl groups, and other fluoroalkyl groups having 3 to 10 carbon atoms. Methyl groups, vinyl groups, phenyl groups, and 3,3,3-trifluoropropyl groups are preferred. If R¹ contains a hydrogen atom in the formula, the present composition can be cured by a hydrosilylation reaction using an alkenyl group-containing organopolysiloxane and a hydrosilylation reaction catalyst, and if R¹ contains an alkenyl group in the formula, the present composition can be cured by a hydrosilylation reaction using a silicon-bonded hydrogen atom-containing organopolysiloxane and a hydrosilylation reaction catalyst.

Furthermore, in the formula, a, b, c, and d each represent numbers satisfying 0 ≤ a ≤ 0.8, 0 ≤ b ≤ 0.8, 0 ≤ c ≤ 0.8, and 0 ≤ d ≤ 0.8, and 0.2 ≤ a + b ≤ 0.8, 0.2 ≤ c + d ≤ 0.8 and a + b + c + d = 1, and preferably numbers satisfying 0 ≤ a ≤ 0.7, 0 ≤ b ≤ 0.7, 0 ≤ c ≤ 0.8, 0 ≤ d ≤ 0.8, and 0.2 ≤ a + b ≤ 0.7, 0.3 ≤ c + d ≤ 0.8, and a + b + c + d = 1, or numbers satisfying 0 ≤ a ≤ 0.6, 0 ≤ b ≤ 0.6, 0 ≤ c ≤ 0.8 and 0 ≤ d ≤ 0.8, and 0.2 ≤ a + b ≤ 0.6, 0.4 ≤ c + d ≤ 0.8, and a + b + c + d = 1. This is because when a, b, c, and d are numbers within the range above, a resulting composition has suitable viscosity and favorable thixotropic properties.

Furthermore, in the formula, e is a number satisfying 0.05 ≤ e ≤ 0.5, and preferably a number satisfying 0.05 ≤ e ≤ 0.45, or a number satisfying 0.05 ≤ e ≤ 0.4. This is because when e is at or above the lower limit of the range above, a resulting composition has favorable thixotropic properties, while when e is at or below the upper limit of the range above, compatibility with component (B) is improved and a resulting composition is uniform.

Component (B) is an organopolysiloxane expressed by the average unit formula:

(R²₃SiO_{1/2})_{f}(R²₂SiO_{2/2})_{g}(R²SiO_{3/2})ₕ(SiO_{4/2})ᵢ(HO_{1/2})ⱼ

In the formula, each R² independently represents a hydrogen atom or a monovalent hydrocarbon group having 1 to 10 carbon atoms. Examples of the monovalent hydrocarbon group of R² include the same alkyl groups, alkenyl groups, aryl groups, aralkyl groups, and fluoroalkyl groups as R¹ above. Methyl groups, vinyl groups, phenyl groups, and 3,3,3-trifluoropropyl groups are preferred. If R² contains a hydrogen atom in the formula, the present composition can be cured by a hydrosilylation reaction using an alkenyl group-containing organopolysiloxane and a hydrosilylation reaction catalyst, and if R² contains an alkenyl group in the formula, the present composition can be cured by a hydrosilylation reaction using a silicon-bonded hydrogen atom-containing organopolysiloxane and a hydrosilylation reaction catalyst.

Furthermore, in the formula, f, g, h, and i each represent numbers satisfying 0 ≤ f ≤ 1, 0 ≤ g ≤ 1, 0 ≤ h ≤ 0.8, and 0 ≤ i ≤ 0.8, and 0.2 ≤ f + g ≤ 1, 0 ≤ h + i ≤ 0.8 and f + g + h + i = 1, and preferably numbers satisfying 0 ≤ f ≤ 1, 0 ≤ g ≤ 1, 0 ≤ h ≤ 0.7, 0 ≤ i ≤ 0.7, 0.3 ≤ f + g ≤ 1, 0 ≤ h + i ≤ 0.7, and f + g + h + i = 1, or numbers satisfying 0 ≤ f ≤ 1, 0 ≤ g ≤ 1, 0 ≤ h ≤ 0.6, and 0 ≤ i ≤ 0.6, and 0.4 ≤ f + g ≤ 1, 0 ≤ h + i ≤ 0.6, and f + g + h + i = 1. This is because when f, g, h, and i are numbers within the range above, a resulting composition has favorable workable viscosity and favorable thixotropic properties.

Furthermore, in the formula, j is a number satisfying 0 ≤ j ≤ 0.05, and preferably a number 0 ≤ j ≤ 0.045, or a number satisfying 0 ≤ j ≤ 0.042. This is because when j is at or below the upper limit of the above, a resulting composition has favorable workable viscosity and favorable thixotropic properties.

In the present composition, the properties of component (A) and component (B) at 25°C are not limited, but the viscosity η of the mixture of components (A) and (B) at 25°C as measured by a rotational viscometer at a shear rate of 10/sec is preferably within a range of 0.01 to 10,000 Pa-s or within a range of 0.05 to 1,000 Pa-s. This is because when the viscosity is at or above the lower limit of the range above, a resulting composition has favorable thixotropic properties, while when the viscosity is at or below the upper limit of the range above, a resulting composition has favorable workable viscosity.

Component (C) is a compound having at least two functional groups selected from ether bonds, ester bonds, and alkoxysilyl groups expressed by the general formula:

R³ₖ(R⁴O)₍₃₋ₖ₎Si-

The ether bond can be a chain C-O-C bond or a cyclic C-O-C bond expressed by the formula: 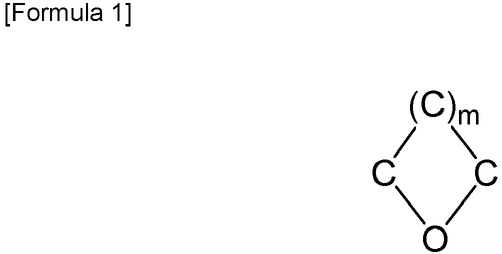 (where m represents an integer between 0 to 10).

In other words, an epoxy group is included if m is 0, and a cyclic ether group is included if n is an integer between 1 and 10.

Furthermore, the ester bond refers to a C(O)-O bond, and may contain a carboxylic acid anhydride group expressed by the formula: 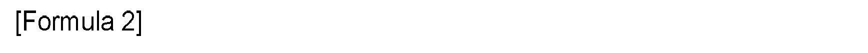 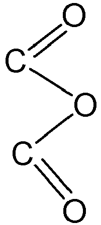 and
a carbonic acid ester group expressed by the formula:

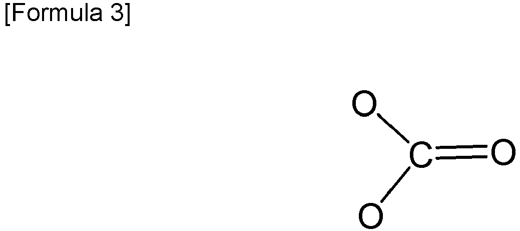

However, in the case of the aforementioned carboxylic acid anhydride group and carbonic acid ester group, two ester bonds can be considered.

Furthermore, R³ in the alkoxysilyl group represents a monovalent hydrocarbon group having 1 to 10 carbon atoms, and examples include the same alkyl groups, alkenyl groups, aryl groups, aralkyl groups, and fluoroalkyl groups as R¹ above. Methyl groups, vinyl groups, phenyl groups, and 3,3,3-trifluoropropyl groups are preferred.

Furthermore, in the formula, R⁴ represents an alkyl group having 1 to 10 carbon atoms, and examples include the same alkyl groups as R¹ above. Methyl groups and ethyl groups are preferred.

Furthermore, in the formula, k represents 0, 1, or 2, and preferably 0.

Examples of compounds containing at least two ether bonds in one molecule include 1,2-dimethoxyethane, diethylene glycol dimethoxy ether, trimethylolpropane diallyl ether, pentaerythritol tetraallyl ether, butyl glycidyl ether, ethylene glycol diglycidyl ether, furfuryl ethyl ether, and polyethers expressed by the formula:

CH₂=CHCH₂O(CH₂CH₂O)ₙCH₃

(where n represents an integer between 1 to 10).

Examples of compounds having at least two ester bonds in one molecule include ethylene glycol diacetate, trimethylolpropane trimethacrylate, pentaerythritol tetramethacrylate, dimethylmalate, dimethylphthalate, maleic anhydride, phthalic anhydride, and dibutyl carbonate.

Examples of compounds having at least two of the aforementioned alkoxysilyl groups in one molecule include 1,2-bis(trimethoxysilyl)ethane, 1,2-bis(triethoxysilyl)ethane, 1,2-bis(methyldimethoxysilyl)ethane, 1,6 1,6-bis(trimethoxysilyl)hexane, 1,6-bis(triethoxysilyl)hexane, and 1,4-bis(trimethoxysilyl)benzene.

Examples of compounds having the aforementioned ether bond and ester bond in one molecule include 2-methoxyethyl acetate, diethylene glycol monoethyl ether acetate, diethylene glycol diacetate, glycidyl acetate, and glycidyl methacrylate.

Examples of compounds having the aforementioned ether bond and alkoxysilyl group in one molecule include 3-glycidoxypropyltrimethoxysilane, 3-glycidoxypropylmethyldimethoxysilane, 2-(3,4-epoxycyclohexyl)ethyltrimethoxysilane, and 2-(3,4-epoxycyclohexyl)ethyldimethoxysilane.

Examples of compounds having the aforementioned ester bond and alkoxysilyl group in one molecule include 3-methacryloxypropyltrimethoxysilane and 3-methacryloxypropylmethyldimethoxysilane.

In the present composition, the amount of the aforementioned component (A) is within a range of 2 to 70 mass% of the sum of component (A) and component (B) above, and preferably within a range of 2 to 60 mass%, within a range of 2 to 50 mass%, or within a range of 2 to 45 mass%. This is because when the amount of component (A) is at or above the lower limit of the range above, the thixotropic properties of a resulting composition is favorable, while when the amount is at or below the upper limit of the range above, the viscosity of a resulting composition is favorable.

In the present composition, the amount of component (C) is an amount where the sum of the functional groups in component (C) is 0.05 mols or more, and preferably 10 mols or less with regard to 1 mol of silicon-bonded hydroxyl groups in component (A). This is because when the amount of component (C) is at or above the lower limit of the range above, the thixotropic properties of a resulting composition is favorable, while when the amount is at or below the upper limit of the range above, the physical properties of a resulting composition and the physical properties of a cured product obtained by crosslinking the composition are not impaired.

When component (B) is an organopolysiloxane having an alkenyl group and an organopolysiloxane having a silicon-bonded hydrogen atom, when component (A) is an organopolysiloxane having a silicon-bonded hydrogen atom, and component (B) is an organopolysiloxane having an alkenyl group, or when component (A) is an organopolysiloxane having an alkenyl group, and component (B) is an organopolysiloxane having a silicon-bonded hydrogen atom, a (D) hydrosilylation reaction catalyst can be further added to the present composition to obtain a composition that is crosslinked by a hydrosilylation reaction.

Examples of component (D) include platinum-based catalysts, palladium-based catalysts, and rhodium-based catalysts, and platinum-based catalysts are preferable. Examples of the platinum-based catalysts include chloroplatinic acids, chloroplatinic acid hexahydrates, platinum dichlorides, alcoholic solutions of a chloroplatinic acid, olefin complexes of platinum, carbonyl complexes of platinum, alkenylsiloxane complexes of platinum, diketone complexes of platinum, olefin complexes of platinum, and other non-microcapsule hydrosilylation reaction catalysts, and microcapsule hydrosilylation reaction catalysts containing an acrylic resin, polycarbonate resin, silicone resin or other resin with a softening point of 40 to 170°C, in which these platinum-based catalysts are dispersed or included. Furthermore, examples of alkenylsiloxanes in the alkenylsiloxane complex of platinum include 1,3-divinyltetramethyldisiloxane, 1,1,3,3-tetravinyldimethyl disiloxane, and methyl(3,3,3-trifluoropropyl)siloxane oligomers blocked with a dimethyvinylsiloxy group.

The amount of component (D) is a catalytic amount for promoting a hydrosilylation reaction of the present composition, and specifically is an amount in which a catalytic metal in the present component is, in mass units, within a range of 0.1 to 1,000 ppm, within a range 0.1 to 500 ppm, or within a range of 0.1 to 250 ppm, with regard to the present composition. This is because, when the amount of component (D) is at or above the lower limit of the range above, curing of the present composition is sufficiently promoted, while when the amount is at or below the upper limit range of the range above, problems such as coloring and the like of a resulting cured product are less likely to occur.

Furthermore, the present composition may also contain, along with component (D), a hydrosilylation reaction inhibitor for adjusting the curing rate of the present composition. Examples of the reaction inhibitor include alkyne alcohols such as 2-methyl-3-butyne-2-ol, 3,5-dimethyl-1-hexyne-3-ol, 3-methyl-1-pentyne-3-ol, 2-phenyl-3-butyne-2-ol, 1-ethynyl-1-cyclohexanol, 2-ethynylisopropanol, 2-ethynylbutane-2-ol, and the like; silylated acetylene alcohols such as trimethyl(3,5-dimethyl-1-hexyne-3-oxy)silane, dimethylbis(3-methyl-1-butynoxy)silane, methylvinylbis(3-methyl-1-butyne-3-oxy)silane, [(1,1-dimethyl-2-propynyl)oxy]trimethylsilane, and the like; enyne compounds such as 2-isobutyl-1-butene-3-yne, 3,5-dimethyl-3-hexene-1-yne, 3-methyl-3-pentene-1-yne, 3-methyl-3-hexene-1-yne, 1-ethynylcyclohexene, 3-ethyl-3-butene-1-yne, 3-phenyl-3-butene-1-yne, and the like; unsaturated carboxylic acid esters such as diallyl maleate, dimethyl maleate, diethyl maleate, diallyl fumarate, bis-2-methoxy-1-methylethyl maleate, monooctyl maleate, monoisooctyl maleate, monoallyl maleate, monomethyl maleate, monoethyl maleate, monoallyl fumarate, 2-methoxy-1-methylethyl maleate, and the like; alkenylsiloxanes such as 1,3,5,7-tetramethyl-1,3,5,7-tetravinylcyclotetrasiloxane, 1,3,5,7-tetramethyl-1,3,5,7-tetrahexenylcyclotetrasiloxane, and the like; and benzotriazoles.

The amount of the hydrosilylation reaction inhibitor is not limited, but is preferably 5 parts by mass or less or 3 parts by mass or less, while a lower limit thereof is preferably 0.01 parts by mass or more or 0.1 parts by mass or more, with regard to a total of 100 parts by mass of component (A) and component (B).

Within a scope where an object of the present invention is not impaired, the present composition may contain: fumed silica and other dry silica fine powders; precipitated silica and other wet silica fine powders; and silica fine powders obtained by hydrophobically treating the surfaces of these silica fine powders with an organosilicon compound such as organosilane, hexaorganodisilazane, diorganopolysiloxane, diorganocyclopolysiloxane, and the like.

### [EXAMPLES]

An organopolysiloxane of the present invention will be described in detail based on examples. Note that in the formula, Me, Ph, and Vi represent a methyl group, phenyl group, and vinyl group, respectively.

### Thixotropy Index

The viscosity (Pa-s) of organopolysiloxane compositions at 25°C was measured using a rotational rheometer (Viscoelasticity measuring device AR500 manufactured by TA Instruments) in accordance with a method specified in JIS K7117-2:1999. Note that for the measurements, a 2° cone plate with a diameter of 20 mm was used to measure the viscosity η₁ at a shear rate of 1/s and viscosity η₂ at a shear rate of 10/s, respectively, and the ratio (n₁/n₂) was expressed as the thixotropy index.

### Degree of Needle Penetration

A cured product was prepared by heating an organopolysiloxane composition at 150°C for 1 hour. The needle penetration of the cured product was measured in accordance with a test method specified in JIS K2207.

### Shore A Hardness

A cured product was prepared by heating an organopolysiloxane composition at 150°C for 1 hour. The hardness of the cured product was measured in accordance with a test method using a type A hardness tester specified in JIS K6253.

### Examples 1 to 39 and Comparative Examples 1 to 25

Organopolysiloxane compositions were prepared by uniformly mixing the following components to obtain the compositions shown in Tables 1 to 9. Note that "molar ratio" in the table indicates the molar ratio of the functional group in component (C) to the silicon-bonded hydroxyl group in component (A).

The following component was used as component (A).
(a-1): Organopolysiloxane expressed by the average unit formula:

   (Me₃SiO_{1/2})_{0.45}(SiO_{4/2})_{0.55}(HO_{1/2})_{0.13}
(a-2): Organopolysiloxane expressed by the average unit formula:

   (Me₃SiO_{1/2})_{0.47}(SiO_{4/2})_{0.53}(HO_{1/2})_{0.13}
(a-3): Organopolysiloxane expressed by average unit formula:

   (Me₃SiO_{1/2})_{0.44}(SiO_{4/2})_{0.56}(HO_{1/2})_{0.10}
(a-4): Organopolysiloxane expressed by average unit formula:

   (Me₃SiO_{1/2})_{0.19}(Ph₂SiO_{2/2})_{0.17}(MeSiO_{3/2})_{0.26}(PhSiO_{3/2})_{0.38}(HO_{1/2})_{0.10}
(a-5): Organopolysiloxane expressed by the average unit formula:

   (ViMe₂SiO_{1/2})_{0.25}(PhSiO_{3/2})_{0.75}(HO_{1/2})_{0.38}

The following components were used for comparisons of component (A).
(a-6): Organopolysiloxane expressed by average unit formula:

   (Me₃SiO_{1/2})_{0.48}(SiO_{4/2})_{0.52}(HO_{1/2})_{0.03}
(a-7): Organopolysiloxane expressed by average unit formula:

   (Me₃SiO_{1/2})_{0.50}(SiO_{4/2})_{0.50}(HO_{1/2})_{0.03}
(a-8): Organopolysiloxane expressed by average unit formula:

   (ViMe₂SiO_{1/2})_{0.25}(PhSiO_{3/2})_{0.75}(HO_{1/2})_{0.01}
(a-9): Organopolysiloxane expressed by average unit formula:

   (Me₂SiO_{2/2})_{0.05}(MePhSiO_{2/2})_{0.47}(Ph₂SiO_{2/2})_{0.06}(MeSiO_{3/2})_{0.6}(PhSiO_{3/2})_{0.16}(HO_{1/2} )004
(a-10): Organopolysiloxane expressed by the average unit formula:

   (Me₂SiO_{2/2})₁(HO_{1/2})_{0.17}

The following component was used as component (B).
(b-1): Organopolysiloxane expressed by average unit formula:

   (ViMe₂SiO_{1/2})_{0.012}(Me₂SiO_{2/2})_{0.988}
(b-2): Organopolysiloxane expressed by average unit formula:

   (ViMe₂SiO_{1/2})_{0.033}(Me₂SiO_{2/2})_{0.967}
(b-3): Organopolysiloxane expressed by average unit formula:

   (Me₃SiO_{1/2})_{0.40}(Me₂ViSiO_{1/2})_{0.10}(SiO_{4/2})₀.₅₀(HO_{1/2})_{0.01}
(b-4): Organopolysiloxane expressed by average unit formula:

   (ViMe₂SiO_{1/2})_{0.007}(Me₂SiO_{2/2})_{0.945}(Pₕ₂SiO_{2/2})_{0.048}
(b-5): Organopolysiloxane expressed by average unit formula:

   (ViMe₂SiO_{1/2})_{0.074}(MePhSiO_{2/2})_{0.956}
(b-6): Organopolysiloxane expressed by average unit formula:

   (ViMe₂SiO_{1/2})_{0.25}(PhSiO_{3/2})_{0.75}(HO_{1/2})_{0.01}
(b-7): Organopolysiloxane expressed by average unit formula:

   (HMe₂SiO_{1/2})_{0.65}(SiO_{4/2})_{0.35}
(b-8): Organopolysiloxane expressed by the average unit formula:

   (HMe₂SiO_{1/2})_{0.60}(PhSiO_{3/2})_{0.40}

The following component was used as component (C).
(c-1): 3-glycidoxypropyltrimethoxysilane
(c-2): 3-methacryloxypropyltrimethoxysilane
(c-3): 1,6-bis(trimethoxysilyl)hexane
(c-4): 1,2-dimethoxyethane
(c-5): Diethyleneglycol dimethoxy ether
(c-6): Polyether expressed by the formula:

   CH₂=CHCH₂O(CH₂CH₂O)₇CH₃

The following components were used for comparisons of component (C).
(c-7): Decyltrimethoxysilane
(c-8): Ethyl orthosilicate
(c-9): Butanol

The following component was used as component (D).
(d-1): 1,3-divinyltetramethyldisiloxane solution of a 1,3-divinyltetramethyldisiloxane complex of platinum (amount of platinum: 4,000 ppm)

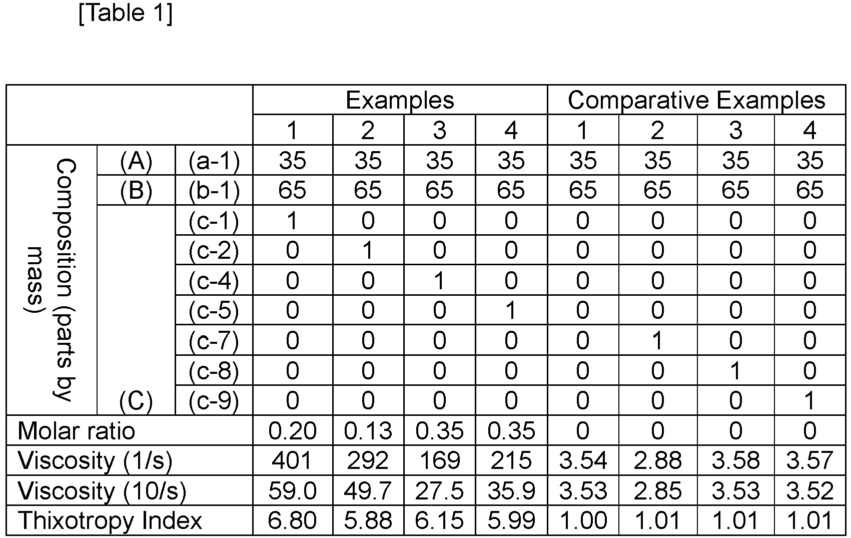

From the results in Table 1, it was confirmed that the mixture of component (A) and component (B) itself does not have thixotropic properties, but adding a specific component (C) thereto provided significant thixotropic properties.

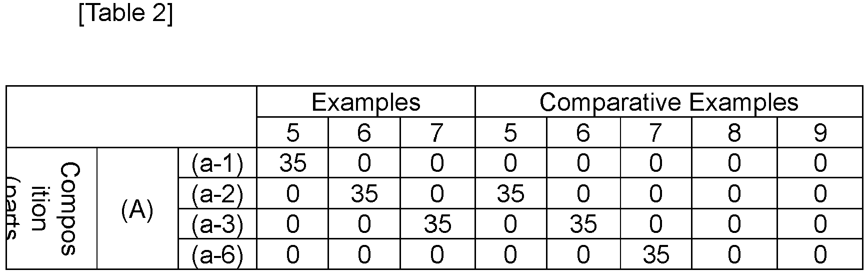

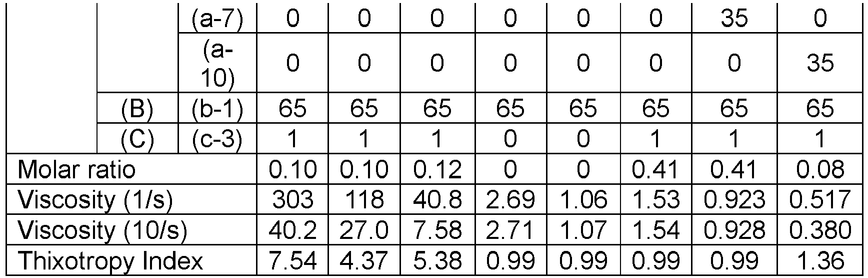

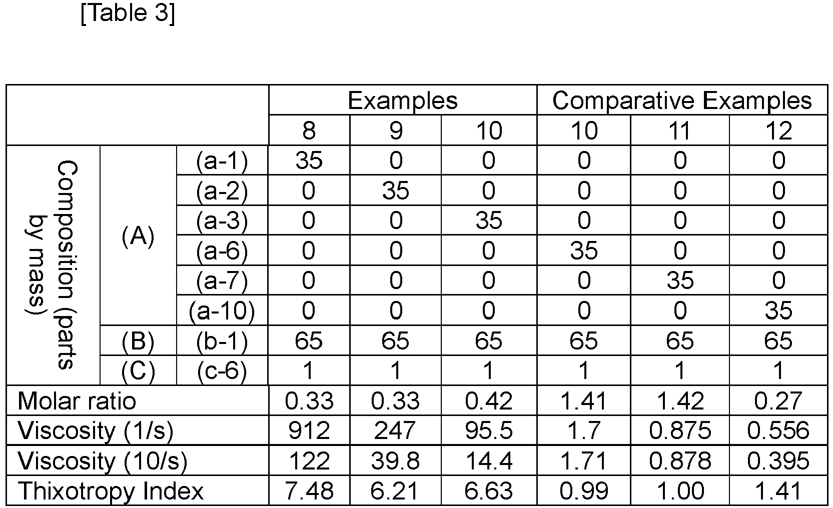

From the results in Tables 2 and 3, it was confirmed that adding a specific component (A) with component (B) and component (C) provided significant thixotropic properties.

**[Table 4-1]**

| | | | Examples | | | | |
|---|---|---|---|---|---|---|---|
| | | | 11 | 12 | 13 | 14 | 15 |
| Composition (parts by mass) | (A) | (a-1) | 3 | 5 | 10 | 20 | 40 |
| | (B) | (b-1) | 97 | 95 | 90 | 80 | 60 |
| | (C) | (c-6) | 1 | 1 | 1 | 1 | 1 |
| Molar ratio | | | 3.82 | 2.29 | 1.15 | 0.57 | 0.29 |
| Mixture of component (A) and component (B) | Viscosity (1/s) | | 0.493 | 0.533 | 0.59 | 0.518 | 8.22 |
| | Viscosity (1 0/s) | | 0.499 | 0.534 | 0.574 | 0.505 | 8.14 |
| | Thixotropy Index | | 0.99 | 1.00 | 1.03 | 1.03 | 1.01 |
| Properties of composition | Viscosity (1/s) | | 2.64 | 5.84 | 28 | 102 | 1950 |
| | Viscosity (1 0/s) | | 1.05 | 1.65 | 4.84 | 13.5 | 279 |
| | Thixotropy Index | | 2.51 | 3.54 | 5.79 | 7.56 | 6.99 |

**[Table 4-2]**

| | | | Comparative Examples |
|---|---|---|---|
| | | | 13 |
| Composition (parts by mass) | (A) | (a-1) | 1 |
| | (B) | (b-1) | 99 |
| | (C) | (c-6) | 1 |
| Molar ratio | | | 11.46 |
| Mixture of component (A) and component (B) | Viscosity (1/s) | | 0.48 |
| | Viscosity (1 0/s) | | 0.484 |
| | Thixotropy Index | | 0.99 |
| Properties of composition | Viscosity (1/s) | | 0.888 |
| | Viscosity (1 0/s) | | 0.61 |
| | Thixotropy Index | | 1.46 |

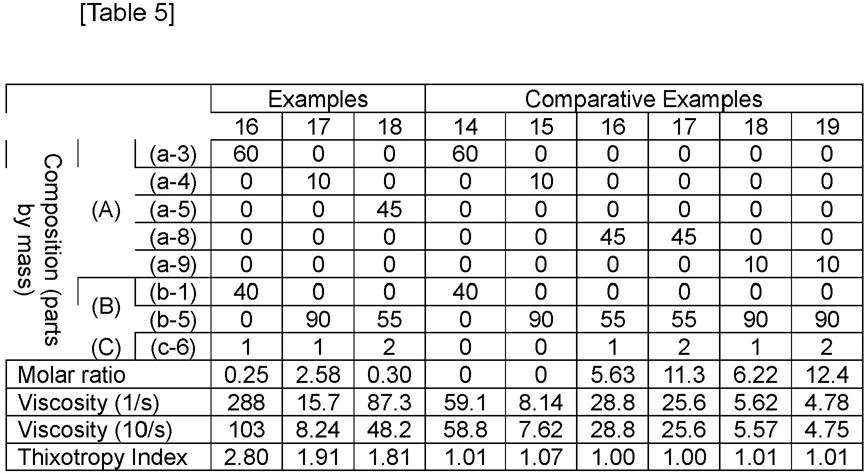

From the results in Tables 4 and 5, it is confirmed that the component (A) and component (B) in specific added amounts and further adding to component (C) provided significant thixotropic properties. Furthermore, it was confirmed that the thixotropic properties were not so remarkable depending on the added amount of component (C).

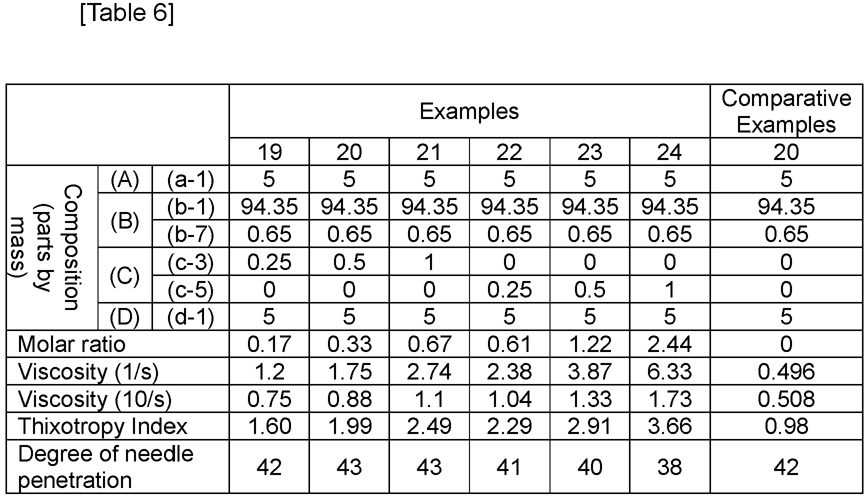

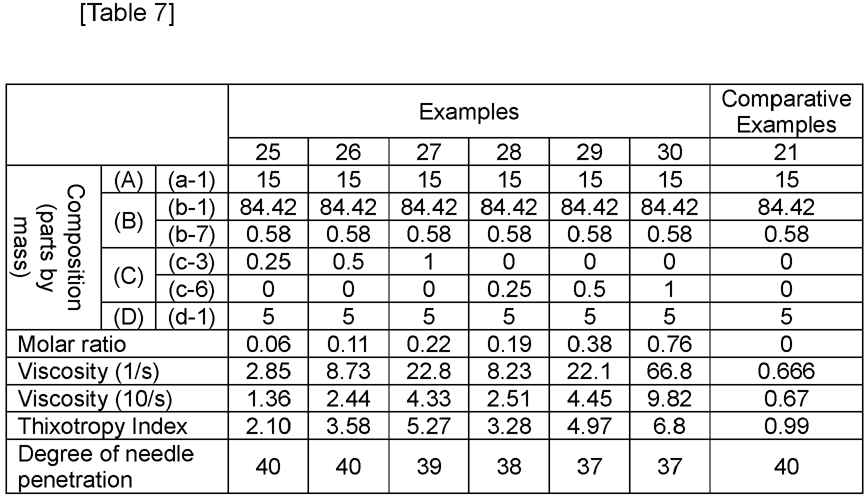

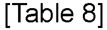

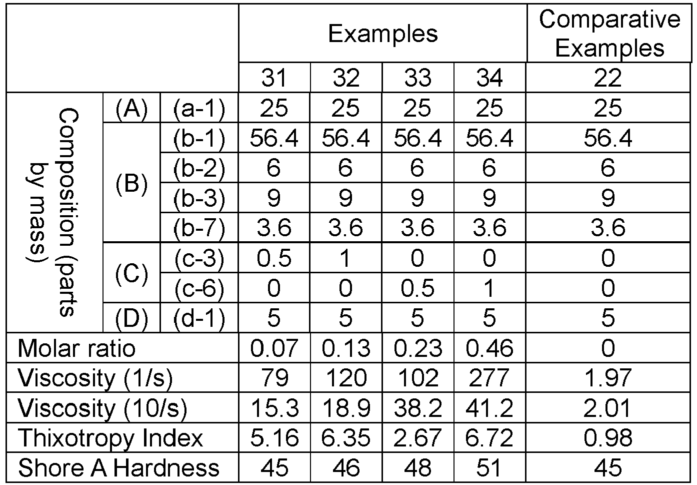

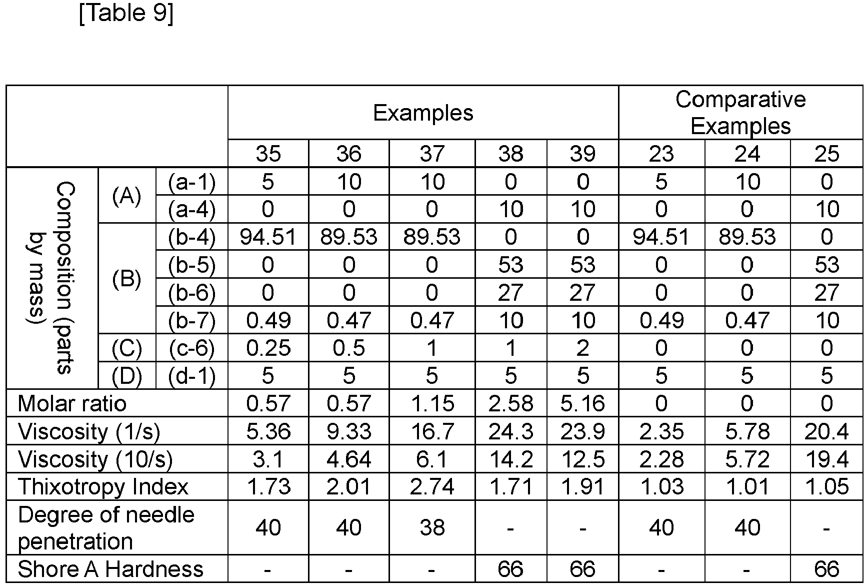

From the results in Tables 6 to 9, it was confirmed that the type and amount of component (C) had little effect on the properties other than thixotropic properties, specifically on the hardness of a cured product.

### [INDUSTRIAL APPLICABILITY]

The organopolysiloxane composition of the present invention exhibits sufficient thixotropic properties independent of fumed silica, precipitated silica, alumina, titanium oxide, and other inorganic powders, and therefore can be used, for example, as a grease material, or by mixing with a crosslinking agent, as a potting agent, coating agent, or molding material.

## Claims

1. An organopolysiloxane composition, at least comprising:
(A) an organopolysiloxane expressed by the average unit formula:
(R¹₃SiO_{1/2})ₐ(R¹₂SiO_{2/2})_{b}(R₁SiO_{3/2})_{c}(SiO_{4/2})_{d}(HO_{1/2})ₑ
(where R¹ each independently represents a hydrogen atom or a monovalent hydrocarbon group having 1 to 10 carbon atoms, and a, b c and d each represent a number satisfying 0 ≤ a ≤ 0.8, 0 ≤ b ≤ 0.8, 0 ≤ c ≤ 0.8, and 0 ≤ d ≤ 0.8, and 0.2 ≤ a + b ≤ 0.8, 0.2 ≤ c + d ≤ 0.8, and a + b + c + d = 1, and e represents a number satisfying 0.05 ≤ e ≤ 0.5);
(B) an organopolysiloxane expressed by the average unit formula:
(R²₃SiO_{1/2})_{f}(R²₂SiO_{2/2})_{g}(R²SiO_{3/2})ₕ(SiO_{4/2})ᵢ(HO_{1/2})ⱼ
(where R² each independently represents a hydrogen atom or a monovalent hydrocarbon group having 1 to 10 carbon atoms, and f, g h, and i each represent a number satisfying 0 ≤ f ≤ 1, 0 ≤ g ≤ 1, 0 ≤ h ≤ 0.8, and 0 ≤ i ≤ 0.8, and 0.2 ≤ f + g ≤ 1, 0 ≤ h + i ≤ 0.8, and f + g + h + i = 1, and j represents a number satisfying 0 ≤ j < 0.05); and
(C) a compound having at least two functional groups selected from ether bonds, ester bonds, and alkoxysilyl groups expressed by the general formula:
R³ₖ(R⁴O)₍₃₋ₖ₎Si⁻
(where R³ represents a monovalent hydrocarbon group having 1 to 10 carbon atoms, R⁴ represents an alkyl group having 1 to 10 carbon atoms, and k represents 0, 1, or 2)
in one molecule; wherein
the amount of component (A) is 2 to 70 mass% of the sum of the aforementioned component (A) and component (B), and the amount of component (C) is an amount in which the sum of the functional groups in component (C) is 0.05 mol or more with regard to 1 mol of the silicon-bonded hydroxyl group in component (A).

2. The organopolysiloxane composition according to claim 1, wherein a viscosity η of the mixture of component (A) and component (B) at 25°C as measured by a rotational viscometer at a shear rate of 10/sec is 0.01 to 10,000 Pa-s.

3. The organopolysiloxane composition according to claim 1, wherein component (C) is a compound having at least two of the ether bonds in one molecule.

4. The organopolysiloxane composition according to claim 1, wherein component (C) is a compound having at least two of the alkoxysilyl groups in one molecule.

5. The organopolysiloxane composition according to claim 1, wherein component (C) is a compound having at least an ether bond and an alkoxysilyl group in one molecule.

6. The organopolysiloxane composition according to claim 1, wherein component (C) is a compound having at least an ester bond and an alkoxysilyl group in one molecule.

7. The organopolysiloxane composition according to claim 1, wherein component (B) is an organopolysiloxane having an alkenyl group and an organopolysiloxane having a silicon-bonded hydrogen atom, the organopolysiloxane composition further comprising:
(D) a hydrosilylation reaction catalyst.
